(19) Europäisches Patentamt
European Patent Office
Office européen des brevets

(11) **EP 2 021 745 B1**

(12) **EUROPÄISCHE PATENTSCHRIFT**

(45) Veröffentlichungstag und Bekanntmachung des Hinweises auf die Patenterteilung:
**23.06.2010 Patentblatt 2010/25**

(21) Anmeldenummer: **07728471.9**

(22) Anmeldetag: **25.04.2007**

(51) Int Cl.:
*G01G 19/08* (2006.01)          *B60T 8/172* (2006.01)
*F16H 59/52* (2006.01)

(86) Internationale Anmeldenummer:
**PCT/EP2007/054015**

(87) Internationale Veröffentlichungsnummer:
**WO 2007/131862 (22.11.2007 Gazette 2007/47)**

(54) **VERFAHREN ZUR ERMITTLUNG DER MASSE EINES KRAFTFAHRZEUGS**

METHOD FOR DETERMINING THE MASS OF A MOTOR VEHICLE

PROCÉDÉ POUR DÉTECTER LA MASSE D'UN VÉHICULE AUTOMOBILE

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **12.05.2006 DE 102006022171**

(43) Veröffentlichungstag der Anmeldung:
**11.02.2009 Patentblatt 2009/07**

(73) Patentinhaber: **ZF Friedrichshafen AG
88038 Friedrichshafen (DE)**

(72) Erfinder:
• **WOLFGANG, Werner
88213 Ravensburg (DE)**
• **WÜRTHNER, Maik
88048 Friedrichshafen (DE)**
• **SAUTER, Ingo
Aberdeen, North Carolina 28315 (US)**

(56) Entgegenhaltungen:
**EP-A2- 0 666 435    DE-A1- 19 837 380
US-B1- 6 249 735**

EP 2 021 745 B1

**Beschreibung**

Die Erfindung betrifft ein Verfahren zur Ermittlung der Masse eines Kraftfahrzeugs, das in Verbindung mit einer Schaltung eines automatisierten Schaltgetriebes von einem Lastgang in einen Zielgang durchgeführt wird, wobei zur Bestimmung eines Massewertes Kraft- und Bewegungsgrößen teils vor oder nach der Schaltung und teils während der Schaltung ermittelt werden.

Die Kenntnis der Masse eines Kraftfahrzeugs ist von elementarer Bedeutung, um das Schaltverhalten eines automatisierten Schaltgetriebes optimal steuern zu können. So wird die Masse zur Berechnung des Fahrwiderstands benötigt, dessen genaue Ermittlung für die Bestimmung der Schaltdrehzahl, bei welcher der aktuell eingelegte Lastgang durch eine Schaltung verlassen wird, und für die Bestimmung des Zielgangs, in den durch die Schaltung gewechselt wird, erforderlich ist. Beispielsweise bei Nutzfahrzeugen, deren Masse sich durch Beladungs- und Entladungsvorgänge stark ändern kann, dient die Masse des Kraftfahrzeugs auch zur Bestimmung des Anfahrgangs.

Ein Verfahren zur Ermittlung der Masse bzw. des Gesamtgewichts eines Kraftfahrzeugs ist aus der EP 0 695 930 A1 bekannt. Dieses bekannte Verfahren bezieht sich auf ein Kraftfahrzeug, dessen Antriebsstrang einen mit einer elektronischen Steuerung versehenen Verbrennungsmotor als Antriebsmotor und ein manuelles Schaltgetriebe aufweist. Zur Ermittlung des Gesamtgewichts des Kraftfahrzeugs ist vorgesehen, dass zu zwei in Beziehung zu einem Hochschaltvorgang stehenden Zeitpunkten jeweils das Drehmoment des Antriebsmotors und die Längsbeschleunigung des Kraftfahrzeugs ermittelt werden und daraus das Fahrzeuggewicht berechnet wird. Die ersten Werte werden bevorzugt unmittelbar vor dem Schließen der Motorkupplung und dem Aufbau des Motormomentes und die zweiten Werte nach dem vollständigen Schließen der Motorkupplung und dem Aufbau des Motormomentes ermittelt. Zur Verbesserung der Genauigkeit des derart bestimmten Gesamtgewichtes ist eine Mittelwertbildung aus mehreren Gewichtswerten vorgesehen, die jeweils aus denselben ersten Werten und aus zu verschiedenen Zeiten ermittelten zweiten Werten berechnet werden. Da insbesondere der Zeitpunkt der Ermittlung der ersten Werte wegen der in Gang befindlichen Synchronisierung und des Einlegens des Zielgangs ungünstig gewählt ist, weist der derart ermittelte Gewichtswert jedoch eine relativ große Ungenauigkeit auf.

Ein weiteres Verfahren zur Ermittlung der Masse eines Kraftfahrzeugs ist Gegenstand der WO 00/11439. Dieses Verfahren bezieht sich auf ein Kraftfahrzeug mit einem automatisierten Schaltgetriebe, bei dem die Zugkraft während einer Gangschaltung unterbrochen ist. Das Verfahren sieht vor, dass in einem Zeitfenster unmittelbar vor oder nach der Gangschaltung mehrere Zugkraftwerte, also Kraftgrößen, und in der zugkraftfreien Phase während der Schaltung mindestens zwei Geschwindigkeitswerte, demnach Bewegungsgrößen, ermittelt werden und daraus ein Massewert berechnet wird. Da auch der mit diesem Verfahren ermittelte Massewert vergleichsweise große Ungenauigkeit aufweisen kann, ist eine Mittelwertbildung aus mehreren in einem Fahrzyklus ermittelten Massewerten vorgesehen.

Nachteilig an beiden bekannten Verfahren ist außer der Ungenauigkeit der ermittelten Gewichts- bzw. Massewerte auch der Umstand, dass pro Schaltung nur ein Massewert ermittelt werden kann, so dass für eine Mittelwertbildung relativ viele Schaltungen und ein entsprechend langer Zeitraum eines Fahrzyklus erforderlich sind.

EP 0 666 435 und US 6 249 735 offenbaren ähnliche Verfahren zur Ermittlung der Masse eines Kraftfahrzeugs.

Der Erfindung liegt daher die Aufgabe zugrunde, ein Verfahren vorzustellen, mit dem die Ermittlung der Masse eines Kraftfahrzeugs schneller und mit höherer Genauigkeit als bisher möglich ist.

Zur Lösung dieser Aufgabe geht die Erfindung aus von einem Verfahren zur Ermittlung der Masse eines Kraftfahrzeugs, das in Verbindung mit einer Schaltung eines automatisierten Schaltgetriebes von einem Lastgang in einen Zielgang durchgeführt wird, wobei zur Bestimmung eines Massewertes Kraft- und Bewegungsgrößen teils vor oder nach der Schaltung und teils während der Schaltung ermittelt werden.

Dieses Verfahren sieht außerdem vor, dass die auf die Antriebsräder bezogene Zugkraft des Antriebsmotors vor und nach der Schaltung $F\_zug\_vor$ bzw. $F\_zug\_nach$ und die Längsbeschleunigung des Kraftfahrzeugs vor und nach der Schaltung $a\_zug\_vor$ bzw. $a\_zug\_nach$ sowie in der zugkraftfreien Phase (Rollphase) während der Schaltung die Beschleunigung in Rollphase $a\_roll$ ermittelt werden, und dass daraus nach der Formel $m = F\_zug / (a\_zug - a\_roll)$ ein erster Massewert $m\_vor = F\_zug\_vor / (a\_zug\_vor - a\_roll)$ für den Beginn der Schaltung und ein zweiter Massewert $m\_nach = F\_zug\_nach /(a\_zug\_nach - a\_roll)$ für das Ende der Schaltung berechnet wird.

Nach der allgemein bekannten Fahrwiderstandsgleichung

$$F\_zug = F\_steig + F\_roll + F\_luft + F\_träg = F\_fw + F\_träg$$

steht die auf die Antriebsräder des Kraftfahrzeugs bezogene Zugkraft $F\_zug$ des Antriebsmotors in Beziehung zu dem Fahrwiderstand $F\_fw$, der sich aus der Summe des Steigungswiderstands $F\_steig$, des Rollwiderstands $F\_roll$ und des Luftwiderstands $F\_luft$ zusammensetzt, und zu der Massenträgheitskraft $F\_träg$ des Kraftfahrzeugs. Da sich die Massenträgheitskraft F_träg aus dem Produkt der aktuellen Fahrzeugmasse m und der aktuellen Fahrzeugbeschleunigung a zu F_träg = m * a ergibt, kann der Fahrwiderstand F_fw in der Form

$$F\_fw = F\_zug - m * a$$

angegeben werden. Unter der Annahme, dass sich der Fahrwiderstand F_fw unmittelbar vor und während einer Schaltung bzw. während und unmittelbar nach einer Schaltung nicht wesentlich ändert, und wegen des in der zugkraftfreien Phase der Schaltung geöffneten Antriebsstrangs (F_zug_roll = 0) gilt:

$$F\_fw\_vor = F\_zug\_vor - m * a\_zug\_vor = F\_fw\_roll = - m * a\_roll$$

und

$$F\_fw\_roll = - m * a\_roll = F\_fw\_nach = F\_zug\_nach - m * a\_zug\_nach$$

Daraus folgt jeweils für zwei Massewerte pro Schaltung:

$$m\_vor = F\_zug\_vor / (a\_zug\_vor - a\_roll)$$

und

$$m\_nach = F\_zug\_nach / (a\_zug\_nach - a\_roll)$$

Somit werden durch das erfindungsgemäße Verfahren jeweils zwei Massewerte pro Schaltung ermittelt, wobei der erste Massewert m_vor zeitlich dem Beginn der Schaltung und der zweite Massewert m_nach dem Ende der Schaltung zuzuordnen ist. Die Genauigkeit der beiden Massewerte m_vor, m_nach richtet sich nach dem jeweiligen Zeitpunkt der Ermittlung der Zugkrattwerte und der Beschleunigungswerte sowie der konkreten Vorgehensweise dabei, und ist zumindest nicht schlechter als die Genauigkeit der Gewichts- oder Massewerte der bekannten Verfahren.

Hinsichtlich der Genauigkeit besonders kritisch ist die Ermittlung der Beschleunigung a_roll in der zugkraftfreien Phase der Schaltung zwischen dem Öffnen und Schließen der Motorkupplung, da in dieser Phase weitgehend unbekannte und nur schwer messbare Kräfte bzw. Drehmomente auf den abtriebsseitigen Antriebsstrang einwirken können. So ist es weitgehend unbekannt, wie schnell der Antriebsmotor während einer Schaltung sein Drehmoment abbaut und wieder aufbaut, welcher Drehmomentanteil über die Synchronisierung des Zielgangs verloren geht, und wie sich Drehschwingungen, die durch den Schaltvorgang, wie durch das Öffnen und Schließen der Motorkupplung, durch das Auslegen des Lastgangs und durch das Synchronisieren und Einlegen des Zielgangs, oder durch Fahrbahnunebenheiten angeregt werden können, auf die Fahrdynamik des Kraftfahrzeugs, also auf die aktuelle Beschleunigung des Kraftfahrzeugs, auswirken.

Daher ist vorgesehen, dass die Beschleunigung a_roll in der Rollphase der Schaltung bevorzugt derart ermittelt wird, dass über eine Zeitspanne $\Delta t$, welche die zugkraftfreie Phase der Schaltung beinhaltet, mehrere diskrete Werte a_i der aktuellen Beschleunigung a des Kraftfahrzeugs erfasst werden, aus diesen Beschleunigungswerten a_i bei einer Zugschaltung das Beschleunigungsminimum a_min und bei einer Schubschaltung das Beschleunigungsmaximum a_max bestimmt wird, und dieser Extremwert der Beschleunigung (a_min oder a_max) nachfolgend als Beschleunigung a_roll in der zugkraftfreien Rollphase verwendet wird.

Durch diese Vorgehensweise wird die Beschleunigung a_roll erfahrungsgemäß verfahrenssicher und mit hoher Genauigkeit ermittelt, so dass damit auch die daraus abgeleiteten Massewertes m_vor bzw. m_nach relativ genau bestimmt werden.

Zur Verbesserung der Genauigkeit bei der Ermittlung der Beschleunigung a_roll in der zugkraftfreien Phase und damit der Massewerte m_vor bzw. m_nach ist zweckmäßig vorgesehen, dass die Beschleunigungswerte a_i zur Erfassung eines optimalen Extremwertes (a_min oder a_max) jeweils in einem zeitlichen Abstand von maximal 10 ms ermittelt werden. In dieser Hinsicht ist es ebenfalls vorteilhaft, wenn die Beschleunigungswerte a_i zur Eliminierung von Messfehlern und Störungen vor der Bestimmung des Extremwertes der Beschleunigung (a_min oder a_max) gefiltert werden, wozu allgemein bekannte numerische Verfahren zur Verfügung stehen.

Da die bei einem einzigen Schaltvorgang wie zuvor beschrieben ermittelten Massewerte m_vor bzw. m_nach dennoch für Steuerungszwecke, wie der Ermittlung der jeweiligen Schaltdrehzahl und des betreffenden Zielgangs zukünftiger Schaltungen, zu ungenau sein können, werden zweckmäßig die über mehrere Schaltungen ermittelten Massewerte m_i gemittelt. Konkret ist hierzu vorgesehen, dass nach dem Start der Ermittlung von Massewerten diejenigen Massewerte m_i, die vorab festgelegte Mindestbedingungen erfüllen, für die Bildung eines für Steuerungszwecke vorgesehenen ersten Massemittelwertes m_m1 aufsummiert werden, bis eine vorab festgelegte Mindestanzahl n von Massewerten m_i erreicht ist, und dass anschließend der erste Massemittelwert m_m1 durch arithmetische Mittelwertbildung m_m1 = 1/n * Σm_i, (i = 1, n) berechnet wird und dieser Massemittelwert m_m1 zunächst für Steuerungszwecke verwendet wird.

Eine Mindestbedingung kann darin bestehen, dass die Beschleunigungsdifferenz a_zug - a_roll größer als ein vorab festgelegter unterer Grenzwert der Beschleunigungsdifferenz Δa_min ist (a_zug - a_roll > Aa_min). Eine weitere Mindestbedingung kann darin bestehen, dass die Zugkraft F_zug bei einer Zugschaltung größer als ein vorab festgelegter unterer Grenzwert F_Zmin der Zugkraft (F_zug > F_Zmin) und bei einer Schubschaltung kleiner als ein vorab festgelegter oberer Grenzwert F_Smax der Schubkraft (F_zug < F_Smax) sein soll.

Als Mindestanzahl n der Massewerte m_i zur Bestimmung eines hinreichend genauen Massemittelwertes m_m1 hat sich in praktischen Versuchen eine Größenordnung von 10 bis 20 Werten als ausreichend erwiesen.

Auf diese Art und Weise wird also in relativ kurzer Zeit, also unter günstigen Bedingungen schon nach 5 Schaltungen, ein relativ genauer erster Massemittelwert m_m1 ermittelt, der nachfolgend für Steuerungszwecke verwendet werden kann.

Bis dieser erste Massemittelwert m_m1 zur Verfügung steht, ist zweckmäßig vorgesehen, dass ein Defaultwert der Masse m_Def, bei dem es sich z.B. um einen Mittelwert zwischen der Leermasse und der maximal zulässigen Gesamtmasse handeln kann, oder ein Schätzwert der Masse m_Sch, bei dem es sich z.B. um den im letzten Fahrzyklus zuletzt ermittelten Massemittelwert handetn kann, für Steuerungszwecke verwendet wird.

Zur Ermittlung eines genaueren Massemittelwertes ist vorteilhaft vorgesehen, dass nach dem Erreichen der Mindestanzahl n von Massewerten m_i und dem Berechnen des ersten Massemittelwertes m_m1 zusätzliche Massewerte m_i ermittelt werden, die vorab festgelegte Bedingungen für gute Massewerte m_gut_i erfüllen, und dass der erste Massemittelwert m_m1 mittels der zusätzlichen guten Massewerte m_gut_i korrigiert wird.

Diese Korrektur könnte durch den sukzessiven Austausch der in die Summe des ersten Massemitfieiwertes m_m1 eingegangenen schlechten Massewerte m_schlecht_i durch die zusätzlich ermittelten guten Massewerte m_gut_i erfolgen. Dies wäre allerdings nachteilig mit einer aufwändigen Indizierung der schlechten Massewerte m_schlecht__i und mit einem insgesamt hohen Rechenaufwand verbunden.

Daher wird vorliegend eine Vorgehensweise zur Korrektur des ersten Massemittelwertes m_m1 favorisiert, bei der schon während des Aufsummierens der Massewerte m_i zur Bildung des ersten Massemittelwertes m_m1 diejenigen Massewerte m_i, welche die Bedingungen für gute Massewerte nicht erfüllen, zu einer Schlechtsumffie Σ m_schlecht_i, (i = 1, n_schlecht) aufsummiert werden, die zusätzlichen guten Massewerte m_gut_i solange ermittelt und zu einer Gutsumme Σ m_gut_i, (i = 1, n_gut) aufsummiert werden, bis deren Anzahl n_gut gleich der Anzahl n_schlecht der zuvor aufsummierten schlechten Massewerte m_schlecht_i ist, und dass nachfolgend durch den Ersatz der Schlechtsumme Σ m_schlecht_i durch die Gutsumme Σ m_gut_i in der Gesamtsumme Σ m_i der Massewerte m_i ein exakterer zweiter Massemittelwert m_m2 berechnet wird, der nachfolgend für Steuerungszwecke verwendet wird.

Bei den Bedingungen für gute Massewerte m_gut_i handelt es sich um gegenüber den Mindestbedingungen verschärfte Anforderungen, durch die der Einfluss von Messfehlern und Störgrößen auf die Ermittlung der Massewerte vermieden oder zumindest deutlich reduziert wird und somit relativ genaue Massewerte m_gut_i erzielt werden.

Gemäß einer Ausgestaltung des Verfahrens gemäß der Erfindung ist vorgesehen, dass eine Bedingung für gute Massewerte zu Beginn der Schaltung m_vor_gut darin besteht, dass die Steigungsdifferenz der Fahrbahn zwischen der Auslösung der Schaltung α_vor und der Rollphase α-roll kleiner als ein vorab festgelegter Grenzwert Δα_max1 sein soll (|α_vor- α_roll | < Δα_max1).

Eine andere Bedingung für gute Massewerte zu Beginn der Schaltung m_vor_gut kann auch darin besteht, dass die Zugkraft vor der Schaltung F_zug_vor bei einer Zugschaltung größer als ein vorab festgelegter Grenzwert F_zug_Zmin1 (F_zug_vor > F_zug_Zmin1) und bei einer Schubschaltung kleiner als ein vorab festgelegter Grenzwert F_zug_Smax1 (F_zug_vor < F_zug_Smax1) sein soll.

Des Weiteren kann vorgesehen sein, dass eine Bedingung für gute Massewerte zum Ende der Schaltung m_nach_gut darin besteht, dass die Steigungsdifferenz zwischen der Auslösung der Schaltung α_vor und der Berechnung

des zweiten Massewertes $\alpha$_nach kleiner als ein vorab festgelegter Grenzwert $\Delta$_max2 sein soll (| $\alpha$_vor - $\alpha$_nach | < $\Delta\alpha$_max2).

Eine weitere Bedingung für gute Massewerte zum Ende der Schaltung m_nach_gut besteht darin, dass die Zugkraft zum Zeitpunkt der Berechnung des zweiten Massewertes m_nach bei einer Zugschaltung größer als ein vorab festgelegter Grenzwert F_zug_Zmin2 (F_zug_nach > F_zu_Zmin2) und bei einer Schubschaltung kleiner als ein vorab festgelegter Grenzwert F_zug_Smax2 (F_zug_vor < F_zug_Smax2) sein soll.

Zudem ist eine Bedingung für gute Massewerte zum Ende der Schaltung m_nach_gut, dass die Drehmomentdifferenz des Antriebsmotors vor und nach der Schaltung M_zug_vor bzw. M_zug_nach kleiner als ein vorab festgelegter Grenzwert $\Delta$M_max sein soll (| M_zug_vor - M_zug_nach | < $\Delta$M_max).

Eine andere Bedingung für gute Massewerte m_vor_gut bzw. m_nach_gut besteht darin, dass die Betriebstemperatur des Antriebsmotors t_M größer als ein vorab festgelegter Grenzwert t_M_min sein soll (t_M > t_M_min).

Außerdem sieht die Erfindung vor, dass eine Bedingung für gute Massewerte m_vor_gut bzw. m_nach_gut darin besteht, dass die vor der Schaltung eingelegte Gangstufe (Lastgang G_L) größer ist als ein kleinster Gang G_min und kleiner als ein größter Gang G_max sein soll (G_L > G_min, G_L < G_max).

Da sich insbesondere bei einem Nutzfahrzeug die Gesamtmasse eines Kraftfahrzeugs auch während der Fahrt durch Beladungs- und Entladungsvorgänge ändern und somit von dem zuvor ermittelten Massemittelwert (m_m 1 oder m_m2) abweichen kann, ist zweckmäßig vorgesehen, dass eine Änderung der Fahrzeugmasse m gegenüber dem aktuellen Massemittelwert (m_m1 oder m_m2) ermittelt wird, und dass bei Überschreitung eines vorab festgelegten Änderungsgrenzwertes $\Delta$m_max die Ermittlung eines neuen Massemittelwertes (m_m1, m_m2) gestartet wird.

Hierzu wird bevorzugt permanent, also parallel und unabhängig zu der Ermittlung der Massemittelwerte m_m1, m_m2, ein gleitender Mittelwert m_mgl aus Massewerten m_i berechnet, welche die Bedingungen für gute Massewerte m_vor_gut bzw. m_nach_gut erfüllen, und die Ermittlung neuer Massemittelwerte m_m1 bzw. m_m2 gestartet, wenn die Differenz zwischen dem gleitenden Mittelwert m-mgl und dem zuletzt ermittelten Massemittelwert (m_m1 oder m_m2) einen vorab festgelegten Grenzwert $\Delta$m_m_max überschreitet (| m_mgl - m_m1 | > $\Delta$m_m_max beziehungsweise | m_mgl - m_m2 | > $\Delta$m_m_max).

Zur Verdeutlichung der Erfindung ist der Beschreibung eine Zeichnung beigefügt.
In dieser zeigt:

Fig. 1     ein Ablaufschema des erfindungsgemäßen Verfahrens,

Fig. 2     einen gemessenen Zeitverlauf der Fahrzeugbeschleunigung a über mehrere Zugschaltungen und

Fig. 3     die vereinfachten Zeitverläufe der Zugkraft F_zug und der Beschleunigung a bei einer einzigen Zug-Hochschaltung.

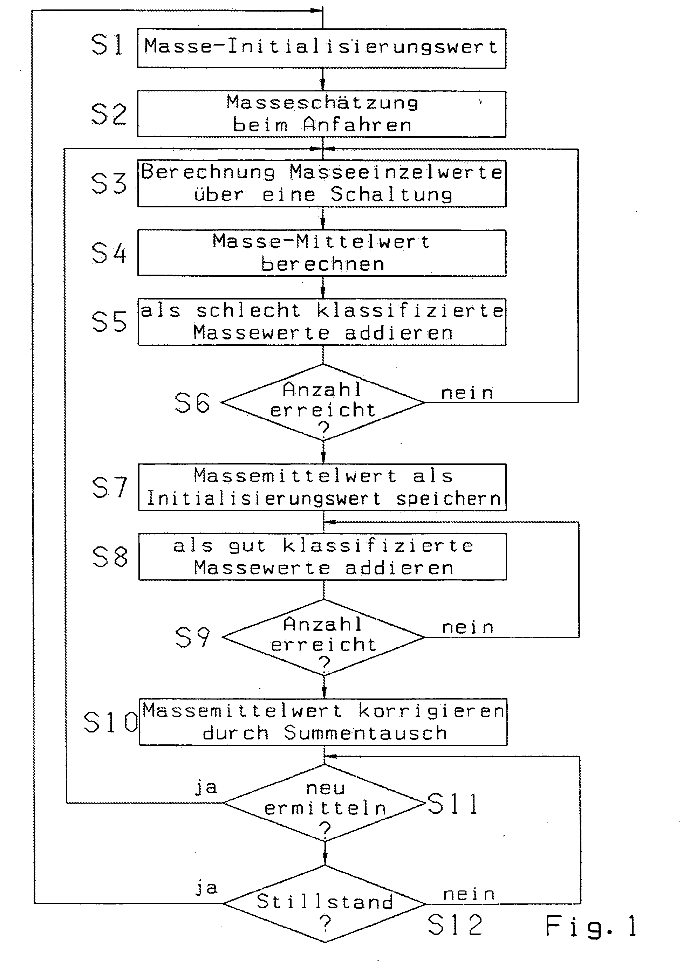

In dem Ablaufschema von Fig. 1 ist in vereinfachter Form der zeitliche Ablauf des erfindungsgemäßen Verfahrens veranschaulicht. Mit der Inbetriebnahme des Kraftfahrzeugs wird das Verfahren zur Ermittlung der Masse des Kraftfahrzeugs gestartet, und nach der Initialisierung in Schritt S1 wird in Schritt S2 während des Anfahrens ein erster, relativ ungenauer Massewert ermittelt. Im nachfolgenden Schritt S3 erfolgt jeweils die Ermittlung von zwei Massewerten über eine Schaltung. In Schritt S4 geschieht die Aufsummierung zu gegebenenfalls schon vorhandenen Massewerten und die Berechnung eines ersten Massemittelwertes m__m1 daraus. Im nachfolgenden Schritt S5 werden diejenigen Massewerte m_i, welche die Bedingungen für gute Massewerte nicht erfüllen und damit als schlecht klassifiziert werden, zu einer Schlechtsumme $\Sigma$ m_schlecht_i aufsummiert.

Anschließend wird in Schritt S6 geprüft, ob die erforderliche Mindestanzahl n von Massewerten m_i für die Bildung des ersten Massemittelwertes m_m1 schon erreicht ist. Falls nicht, werden die Schritte S3 bis S6 wiederholt solange durchlaufen, bis die Mindestanzahl n von Massewerten m_i erreicht ist.

Danach wird der erste Massemittelwert m_m1 in Schritt S7 als Initialisierungswert für zukünftige Fahrzyklen abgespeiehert. Im nachfolgenden Schritt S8 werden zusätzlich ermittelte und als gut klassifizierte Massewerte m_gut_i aufsummiert.

Anschließend wird in Schritt S9 geprüft, ob die Anzahl n_gut der als gut klassifizierten zusätzlichen Massewerte m_gut_i die Anzahl n_schlecht der als schlecht klassifizierten ersten Massewerte m_schlecht_i erreicht hat. Falls nicht, werden die Schritte S8 und S9 wiederholt solange durchlaufen, bis die Anzahl n_gut der guten Massewerte m_gut_i die Anzahl n_schlecht der schlechten Massewerte m_schlecht erreicht hat.

Danach erfolgt in Schritt S10 die Korrektur des ersten Massemittelwertes m_m1 durch den Austausch der darin enthaltenen Summe der schlechten Massewerte $\Sigma$ m_schlecht_i durch die soeben ermittelte Summe der guten Masse-werte $\Sigma$ m_gut_i, wodurch der wesentlich genauere zweite Massemittelwert m_m2 gebildet wird.

Anhand hier nicht ausführlich genannter Kriterien, wie z:B. der Abweichung eines gleitenden Durchschnittswertes m_mgl der weiterhin laufend ermittelten Massewerte m_gut_i von dem zuletzt ermittelten Massemittelwert m_m2, wird danach in Schritt S11 geprüft, ob die Ermittlung der Masse m durch die Berechnung der Massemittelwerte m_m1, m_m2 neu gestartet werden muss. In diesem Fall wird vor den Schritt S3 zurück verzweigt.

Falls nicht, wird in dem nachfolgenden Schritt S12 geprüft, ob das Fahrzeug hinreichend lange steht oder der Antriebsmotor abgestellt wurde, was durch einen Rücksprung vor den Schritt S1 zu einem kompletten Neustart des Verfahrens führt. Im negativen Fall wird dagegen vor den Schritt S11 zurück verzweigt, so dass dann die Schritte S11 und S12 kontinuierlich solange durchlaufen werden, bis eine der beiden Bedingungen erfüllt ist und dann entsprechend rückverzweigt wird.

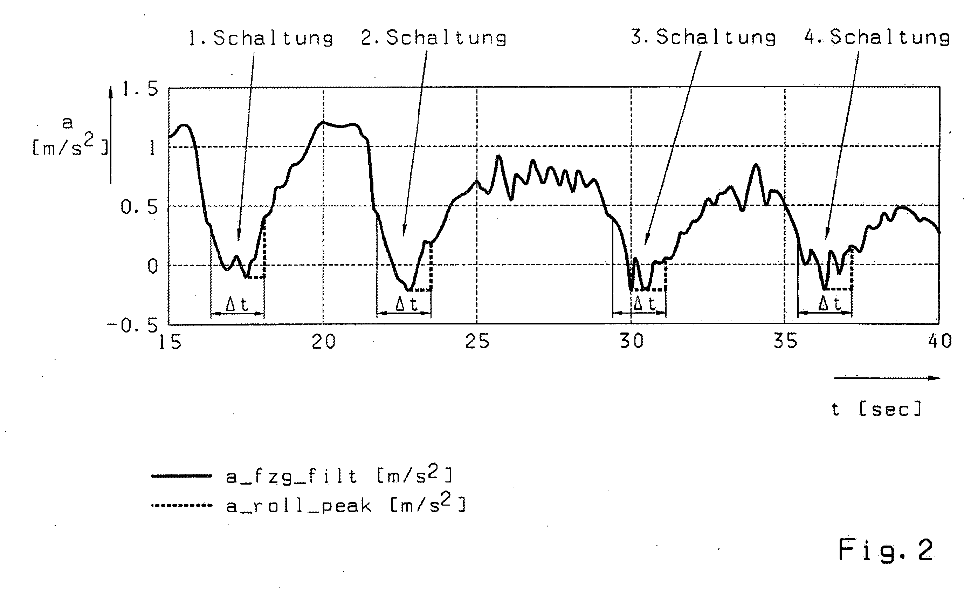

Da die Ermittlung besonders der guten Massewerte m_gut_i auf der exakten Erfassung der Beschleunigung a_roll des Kraftfahrzeugs in der zugkraftfreien Phase der Schaltung beruht, ist die Ermittlung dieses Beschleunigungswertes a_roll beispielhaft in dem Diagramm von Fig. 2 veranschaulicht. Darin ist der Zeitverlauf der Beschleunigung a eines Kraftfahrzeugs über mehrere mit einer Unterbrechung der Zugkraft verbundene Schaltungen dargestellt. Dabei gibt die durchgezogene Linie die gefilterten Werte a_fzg_filt kontinuierlich, also in einem festgelegten Zeitintervall von etwa 10-20 ms, ermittelter Beschleunigungswerte a_i wieder. Bei den Schaltungen handelt es sich jeweils um eine Zugschaltung. Demzufolge führt jede der Schaltungen zu einem Einbruch der Beschleunigung a, die während der Schaltungen jeweils negative Werte annimmt. Das Kraftfahrzeug wird also jeweils während der Schaltung durch den wirksamen Fahrwiderstand F_fw abgebremst, da der Triebstrang zeitweise geöffnet ist und dann kein Antriebsmoment in Form einer Zugkraft auf die Antriebsräder übertragen wird (F_zug = 0).

Zur Ermittlung der Beschleunigung a in der zugkraftfreien Phase der Schaltung wird nun bei jeder der Schaltungen jeweils in einer Zeitspanne Δt, welche die zugkraftfreie Phase beinhaltet, ein Extremwert der in diesem Zeitraum erfassten Beschleunigungswerte a_i ermittelt. Da es sich vorliegend um Zugschaltungen handelt, wird jeweils das Beschleunigungsminimum a_min bestimmt. Der Verlauf dieses Extremwertes a_roll_peak ist in Fig. 2 jeweils durch die unterbrochene Linie dargestellt.

Hierdurch wird deutlich, dass durch das Verfahren trotz starker Störungen zu Beginn und zum Ende der jeweiligen Schaltung das jeweilige Beschleunigungsminimum a_min sicher ermittelt wird. Diesem Beschleunigungsminimum a-min ist jeweils der momentane Fahrwiderstand F_fw eindeutig zuzuordnen, so dass hiermit eine relativ genaue Berechnung der beiden Massewerte m_vor bzw, m_nach über die jeweilige Schaltung möglich ist.

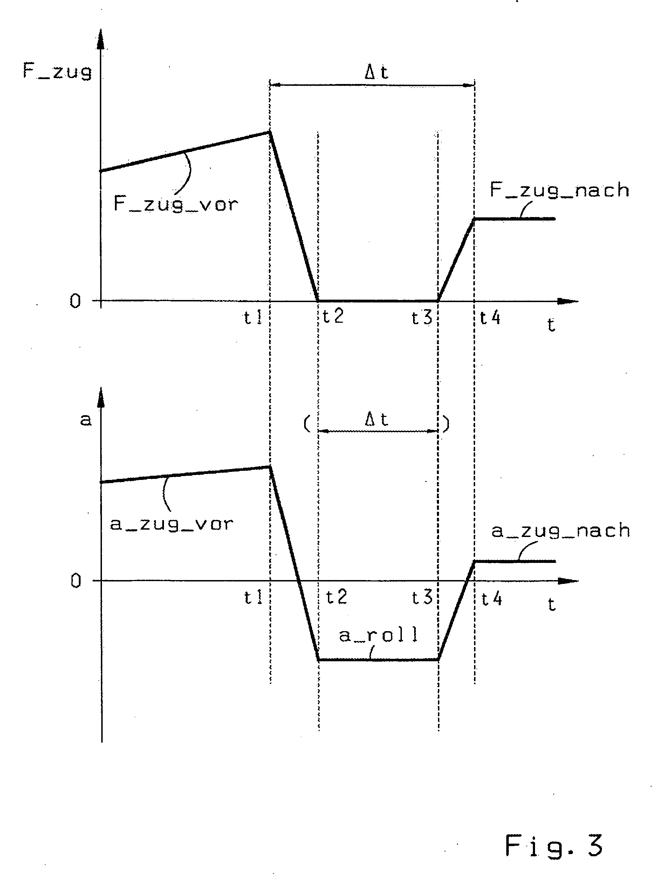

Zur weiteren Veranschaulichung des Verfahrens ist in Fig.3 eine Zug-Hochschaltung mit vereinfachten Zeitverläufen der Beschleunigung a und der auf die Antriebsräder bezogenen Zugkraft F_zug des Antriebsmotors mit größerer zeitlicher Auflösung dargestellt. Die Schaltung beginnt zum Zeitpunkt t1 und endet zum Zeitpunkt t4. Zwischen dem Zeitpunkt t1 und t2 wird die Motorkupplung geöffnet und das Drehmoment des Antriebsmotors abgebaut, gegebenenfalls auch schon der eingelegte Lastgang ausgelegt.

Unmittelbar vor dem Zeitpunkt t3 wird der einzulegende Zielgang synchronisiert und nachfolgend eingelegt. Das Schließen der Motorkupplung und der Aufbau des Drehmomentes des Antriebsmotors erfolgt zwischen dem Zeitpunkt t3 und dem Zeitpunkt t4.

Die zugkraftfreie Phase der Schaltung erstreckt sich somit in etwa zwischen dem Zeitpunkt t2 und dem Zeitpunkt t3, wobei aber zu Beginn und zum Ende dieses Zeitraums bekanntlich noch starke Störungseinflüsse wirksam sein können. In der Mitte der zugkraftfreien Phase ist die Beschleunigung a jedoch weitgehend störungsfrei und entspricht dem gesuchten Minimalwert a_min bzw. a_roll.

Zur Ermittlung des ersten Massewertes m_vor = F_zug_vor/(a_zug_vor - a_roll) werden die Zugkraft F_zug_vor und die Beschleunigung a_zug_vor unmittelbar vor Beginn der Schaltung, also vor dem Zeitpunkt t1 ermittelt. Ebenso werden zur Ermittlung des zweiten Massewertes m_nach = F_zug_nach/(a_zug_nach - a_roll) die Zugkraft F_zug_nach und die Beschleunigung a_zug_nach unmittelbar nach dem Ende der Schaltung, also nach dem Zeitpunkt t4 bestimmt. Die Ermittlung der Beschleunigung a_roll ist dagegen für beide Massewerte m_vor bzw. m_nach identisch und erfolgt wie zuvor beschrieben durch die Bestimmung des Beschleunigungsminimums a_min in der zugkraftfreien Phase der Schaltung.

Zur sicheren Ermittlung dieses Beschleunigungsminimums a_min wird die Zeitspanne Δt, in der aus den aktuellen Beschleunigungswerten a_i bzw. a_fzg_filt das Beschleunigungsminimum a_min bestimmt wird, so gewählt, dass die zugkraftfreie Phase sicher enthalten ist. Die Zeitspanne Δt kann sich beispielsweise, wie in dem oberen Teil von Fig. 3 eingezeichnet, von dem Zeitpunkt t1 bis zum Zeitpunkt t4 oder, wie in dem unteren Teil von Fig. 3 eingezeichnet, von dem Zeitpunkt t2 bis zum Zeitpunkt t3 erstrecken.

**Bezugszeichen**

| | |
|---|---|
| a | Beschleunigung, Längsbeschleunigung |
| a_fzg_filt | gefilterter Beschleunigungswert |
| a_i | diskreter Beschleunigungswert |

| a_max | Maximalwert von a_i, Beschleunigungsmaximum |
| a_min | Minimalwert von a_i, Beschleunigungsminimum |
| a_roll | Beschleunigung in Rollphase |
| a_roll-peak | Extremwert der Beschleunigung |
| a_zug_nach | Beschleunigung nach Schaltung |
| a_zug_vor | Beschleunigung vor Schaltung |
| F_fw | Fahrwiderstand |
| F_luft | Luftwiderstand |
| F_roll | Rollwiderstand |
| F_steig | Steigungswiderstand |
| F_träg | Massenträgheitskraft |
| F_zug | Zugkraft |
| F_zug_vor | Zugkraft vor Schaltung |
| F_zug_nach | Zugkraft nach Schaltung |
| F_zug_Zmin1 | Grenzwert der Zugkraft vor einer Zugschaltung |
| F_zug_Zmin2 | Grenzwert der Zugkraft bei einer Zugschaltung |
| G_L | Gangstufe Lastgang |
| G_min | kleinster Gang |
| G_max | größter Gang |
| m | Masse, Gesamtmasse |
| m_gut_i | als gut klassifizierter Massewert |
| m_i | Massewert |
| m_m1 | erster Massemittelwert |
| m_m2 | zweiter Massemittelwert |
| m_mgl | gleitender Durchschnitt von Massewerten |
| m_nach | zweiter Massewert |
| m_Def | Defaultwert der Masse |
| m_Sch | Schätzwert der Masse |
| m_schlecht_i | als schlecht klassifizierter Massewert |
| m_vor | erster Massewert |
| m_gut_vor | guter Massewert zu Beginn der Schaltung |
| m_gut_nach | guter Massewert zum Ende der Schaltung |
| $\Delta$m_m_max | Grenzwert des Massemittelwertes |
| M_zug_vor | Drehmoment des Antriebsmotors vor Schaltung |
| M_zug_nach | Drehmoment des Antriebsmotors nach Schaltung |
| $\Delta$M_max | Grenzwert der Drehmomentdifferenz |
| n | Mindestanzahl der Massewerte |
| n_gut | Anzahl der als gut klassifizierten Massewerte |
| n_schlecht | Anzahl der als schlecht klassifizierten Massewerte |
| S1 - S12 | Verfahrensschritte |
| t | Zeit |
| t1 | Zeitpunkt |
| t2 | Zeitpunkt |
| t3 | Zeitpunkt |
| t4 | Zeitpunkt |
| $\Delta$t | Zeitspanne |
| t_M | Betriebstemperatur des Antriebsmotors |
| t_M-min | Grenzwert der Betriebstemperatur Antriebsmotor |
| $\alpha$_vor | Steigung der Fahrbahn vor der Schaltung |
| $\alpha$_roll | Steigung der Fahrbahn während der Rollphase |
| $\alpha$_nach | Steigung der Fahrbahn nach der Schaltung |
| $\Delta\alpha$_max1 | Grenzwert der Steigungsdifferenz |
| $\Delta\alpha$_max2 | Grenzwert der Steigungsdiffierenz |

**Patentansprüche**

1. Verfahren zur Ermittlung der Masse eines Kraftfahrzeugs, das in Verbindung mit einer Schaltung eines automatisierten Schaltgetriebes von einem Lastgang in einen Zielgang durchgeführt wird, wobei zur Bestimmung eines Massewertes Kraft- und Bewegungsgrößen teils vor oder nach der Schaltung und teils während der Schaltung ermittelt werden, **dadurch gekennzeichnet, dass** die auf die Antriebsräder bezogene Zugkraft des Antriebsmotors vor und nach der Schaltung F_zug_vor bzw. F_zug_nach und die Längsbeschleunigung des Kraftfahrzeugs vor und nach der Schaltung a_zug__vor bzw. a_zug_nach sowie in der zugkraftfreien Rollphase während der Schaltung die Beschleunigung in Rollphase a_roll ermittelt werden, und dass daraus nach der Formel m = F_zug/(a_zug - a_roll) ein erster Massewert m_vor = F_zug_vor/(a_zug_vor - a_roll) für den Beginn der Schaltung und ein zweiter Massewert m_nach = F_zug_nach/(a_zug _nach - a_roll) für das Ende der Schaltung berechnet wird.

2. Verfahren nach Anspruch 1, **dadurch gekennzeichnet, dass** die Beschleunigung a_roll in der Rollphase der Schaltung ermittelt wird, indem über eine Zeitspanne $\Delta t$, welche die zugkraftfreie Phase der Schaltung beinhaltet, mehrere diskrete Werte a_i der aktuellen Beschleunigung a des Kraftfahrzeugs erfasst werden, und aus diesen Beschleunigungswerten a_i bei einer Zugschaltung das Beschleunigungsminimum a_min und bei einer Schubschaltung das Beschleunigungsmax.imum a_max bestimmt wird, und dieser Extremwert der Beschleunigung a_min oder a_max als Beschleunigung a_roll verwendet wird.

3. Verfahren nach Anspruch 2, **dadurch gekennzeichnet, dass** die Beschleunigungswerte a_i zur Erfassung eines optimalen Extremwertes der Beschleunigung a_min oder a_max jeweils in einem zeitlichen Abstand von maximal 10 ms ermittelt werden.

4. Verfahren nach Anspruch 2 oder 3, **dadurch gekennzeichnet, dass** die Beschleunigungswerte a_i zur Eliminierung von Messfehlern und Störungen vor der Bestimmung des Extremwertes der Beschleunigung a_min oder a_max gefiltert werden.

5. Verfahren nach zumindest einem der Ansprüche 1 bis 4, **dadurch gekennzeichnet, dass** nach dem Start der Ermittlung von Massewerten diejenigen Massewerte, die vorab festgelegte Mindestbedingungen erfüllen, für die Bildung eines für Steuerungszwecke vorgesehenen ersten Massemittelwertes m_m1 aufsummiert werden, bis eine vorab festgelegte Mindestanzahl n von Massewerte m_1 erreicht ist, und dass anschließend der erste Massemittelwert m_m1 durch arithmetische Mittelwertbildung berechnet wird mit m_m1 = 1/n * $\Sigma$m_i, (i = 1, n) und dieser Massemittelwert m_m1 zunächst für Steuerungszwecke verwendet wird.

6. Verfahren nach Anspruch 5, **dadurch gekennzeichnet, dass** eine Mindestbedingung darin besteht, dass die Beschleunigungsdifferenz a_zug - a_roll größer als ein vorab festgelegter unterer Grenzwert der Beschleunigungsdifferenz $\Delta a$_min sein soll d.h. a_zug - a_roll > $\Delta a$_min.

7. Verfahren nach Anspruch 5 oder 6, **dadurch gekennzeichnet, dass** eine Mindestbedingung darin besteht, dass die Zugkraft F_zug bei einer Zugschaltung größer als ein vorab festgelegter unterer Grenzwert F_Zmin der Zugkraft d.h. F_zug > F_Zmin und bei einer Schubschaltung kleiner als ein vorab festgelegter oberer Grenzwert F_Smax der Schubkraft d.h. F_zug < F_Smax sein soll.

8. Verfahren nach zumindest einem der Ansprüche 5 bis 7, **dadurch gekennzeichnet, dass** die Mindestanzahl n der Massewerte m_i in der Größenordnung von 10 bis 20 Werten liegt.

9. Verfahren nach zumindest einem der Ansprüche 5 bis 8, **dadurch gekennzeichnet, dass** vor dem Erreichen der Mindestanzahl n von Massewerten m_i ein Defaultwert der Masse m_Def oder ein Schätzwert der Masse m_Sch für Steuerungszwecke verwendet wird.

10. Verfahren nach zumindest einem der Ansprüche 5 bis 9, **dadurch gekennzeichnet, dass** nach dem Erreichen der Mindestanzahl n von Massewerten m und dem Berechnen des ersten Massemittelwertes m_m1 zusätzliche Massewerte m_i ermittelt werden, die vorab festgelegte Bedingungen für gute Massewerte m_gut_i erfüllen, und dass der erste Massemittelwert m_m1 mittels der zusätzlichen guten Massewerte m_gut_i korrigiert wird.

11. Verfahren nach Anspruch 10, **dadurch gekennzeichnet, dass** die Korrektur des ersten Massemittelwertes m_m1 derart erfolgt, dass schon während des Aufsummierens der Massewerte m_i zur Bildung des ersten Massemittelwertes m_m1 diejenigen Massewerte m_i, welche die Bedingungen für gute Massewerte nicht erfüllen, zu einer Schlechtsumme $\Sigma$m_schlecht_i, (i = 1, n_schlecht) aufsummiert werden, dass die zusätzlichen guten Massewerte m_gut_i solange ermittelt und zu einer Gutsumme $\Sigma$m_gut_i, (i = 1, n_gut) aufsummiert werden, bis deren Anzahl n_gut gleich der Anzahl n_schlecht der zuvor aufsummierten schlechten Massewerte m_schlecht_i ist, und dass nachfolgend durch den Ersatz der Schlechtsumme Σm_schlecht_i durch die Gutsumme Σm_gut_i in der Gesamtsumme Σm_i des ersten Massemittelwertes m_m1 ein exakterer zweiter Massemittelwert m_m2 berechnet wird, der nachfolgend für Steuerungszwecke verwendet wird.

12. Verfahren nach Anspruch 10 oder 11, **dadurch gekennzeichnet, dass** eine Bedingung für gute Massewerte zu Beginn der Schaltung m_vor_gut darin besteht, dass die Steigungsdifferenz zwischen der Auslösung der Schaltung $\alpha$_vor und der Rollphase $\alpha$_roll kleiner als ein vorab festelegter Grenzwert $\Delta\alpha$_max1 sein soll d.h. |$\alpha$-vor - $\alpha$_roll | < $\Delta\alpha$_max1.

13. Verfahren nach zumindest einem der Ansprüche 10 bis 12, **dadurch gekennzeichnet, dass** eine Bedingung für gute Massewerte zu Beginn der Schaltung m_vor_gut darin besteht, dass die Zugkraft vor der Schaltung F_zug_vor bei einer Zugschaltung größer als ein vorab festgelegter Grenzwert F_zug_Zmin1 d.h. F_zug vor > F_zug_Zmin1 d.h. und bei einer Schubschaltung kleiner als ein vorab festgelegter Grenzwert F_zug_Smax1 d.h. F_zug_vor < F_zug-Smax1 d.h. sein soll.

14. Verfahren nach zumindest einem der Ansprüche 10 bis 13, **dadurch gekennzeichnet, dass** eine Bedingung für gute Massewerte zum Ende der Schaltung m_nach_gut darin besteht, dass die Steigungsdifferenz zwischen der Auslösung der Schaltung $\alpha$_vor und der Berechnung des zweiten Massewertes $\alpha$_nach kleiner als ein vorab festgelegter Grenzwert $\Delta\alpha$_max2 sein soll d.h. |$\alpha$_vor-$\alpha$_nach | < $\Delta\alpha$_max2.

15. Verfahren nach zumindest einem der Ansprüche 10 bis 14, **dadurch gekennzeichnet, dass** eine Bedingung für gute Massewerte zum Ende der Schaltung m_nach_gut darin besteht, dass die Zugkraft zum Zeitpunkt der Berechnung des zweiten Massewertes m_nach bei einer Zugschaltung größer als ein vorab festgelegter Grenzwert F_zug_Zmin2 d.h. F_zug_nach > F_zug_Zmin2 und bei einer Schubschaltung kleiner als ein vorab festgelegter Grenzwert F_zug_Smax2 d.h. F_zug_vor < F_zug_Smax2 sein soll.

16. Verfahren nach zumindest einem der Ansprüche 10 bis 15, **dadurch gekennzeichnet, dass** eine Bedingung für gute Massewerte zum Ende der Schaltung m_nach_gut darin besteht, dass die Drehmomentdifferenz des Antriebsmotors vor und nach der Schaltung M_zug_vor, M_zug_nach kleiner als ein vorab festgelegter Grenzwert $\Delta$M_max sein soll d.h. |M_zug_vor - M_zug_nach < $\Delta$M_max.

17. Verfahren nach zumindest einem der Ansprüche 10 bis 16, **dadurch gekennzeichnet, dass** eine Bedingung für gute Massewerte m_vor_gut, m_nach_gut darin besteht, dass die Betriebstemperatur des Antriebsmotors t_M größer als ein vorab festgelegter Grenzwert t_M_min sein soll d.h. t_M > t_M_min.

18. Verfahren nach zumindest einem der Ansprüche 10 bis 17, **dadurch gekennzeichnet, dass** eine Bedingung für gute Massewerte m_vor_gut, m_nach_gut darin besteht, dass die vor der Schaltung eingelegte Gangstufe (Lastgang G_L) größer als ein kleinster Gang G_min und kleiner als ein größter Gang G_max sein soll d.h. G_L > G_min, G_L < G_max.

19. Verfahren nach zumindest einem der Ansprüche 5 bis 18, **dadurch gekennzeichnet, dass** eine Änderung der Fahrzeugmasse m gegenüber dem aktuellen Massemittelwert m_m1 oder m-m2 ermittelt wird, und dass bei Überschreitung eines vorab festgelegten Änderungsgrenzwertes m_max die Ermittlung eines neuen Massemittelwertes (m_m1, m_m2) gestartet wird.

20. Verfahren nach Anspruch 19, **dadurch gekennzeichnet, dass** permanent ein gleitender Mittelwert m-mgl aus Massewerten m_i bereichnet wird, welche die Bedingungen für gute Massewerte m_vor_gut, m_nach_gut erfüllen, und dass die Ermittlung neuer Massemittelwerte m_m1, m_m2 gestartet wird, wenn die Differenz zwischen dem gleitenden Mittelwert m_mgl und dem zuletzt ermittelten Massemittelwert m_m1 oder m_m2 einen vorab festgelegten Grenzwert $\Delta$m_m_max überschreitet d.h. m_mgl- m_m1 |> Am_m_max beziehungsweise |m_mgl - m_m2 | > $\Delta$m_m_max.

**Claims**

1. Method for determining the mass of a motor vehicle, which is carried out in conjunction with shifting of an automated manual transmission from a low gear into a target gear, wherein, in order to determine a mass value, force variables and movement variables partially before or after the shifting operation and partially during the shifting operation are determined, **characterized in that** the traction force of the drive motor which is related to the driven wheels before and after the shifting operation F_trac_bef and respectively F_trac_aft and the longitudinal acceleration of the motor vehicle before and after the shifting operation a_trac_bef and respectively a_trac_aft, and the acceleration in the rolling phase a_roll is determined in the traction-force-free rolling phase during the shifting operation, and **in that** a first mass value m__bef = F_trac_bef/(a_trac_bef-a_roll) for the start of the shifting operation and a second measured value m_aft = F_trac_aft/(a_trac_aft-a_roll) for the end of the shifting operation are calculated according to the formula m = F_trac/(a_trac-a_roll).

2. Method according to Claim 1, **characterized in that** the acceleration a_roll in the rolling phase of the shifting operation is determined by acquiring a plurality of discrete values a_i of the current acceleration a of the motor vehicle over a time period Δt which includes the traction-force-free phase of the shifting operation, and the acceleration minimum a_min is determined from these acceleration values a_i during a traction shifting operation, and the acceleration maximum a_max is determined during an overrun shifting operation, and this extreme value of the acceleration a_min or a_max is used as acceleration a_roll.

3. Method according to Claim 2, **characterized in that** the acceleration values a_i are determined in order to acquire an optimum extreme value of the acceleration a_min or a_max in each case at a time interval of at most 10 ms.

4. Method according to Claim 2 or 3, **characterized in that** the acceleration values a_i are filtered before the determination of the extreme value of the acceleration a_min or a_max in order to eliminate measurement errors and faults.

5. Method according to at least one of Claims 1 to 4, **characterized in that**, after the start of the determination of mass values, those mass values which meet previously defined minimum conditions are summed for the formation of a first mass mean value m_m1 provided for control purposes until a previously defined minimum number n of mass values m_i is reached, and **in that** subsequently the first mass mean value m_m1 is calculated by arithmetic mean value formation with m_m1 = 1/n*Σm_i, (i = 1, n), and this mass mean value m_m1 is initially used for control purposes.

6. Method according to Claim 5, **characterized in that** a minimum condition is that the acceleration difference a_trac-a_roll is to be greater than a previously defined lower limiting value of the acceleration difference Δa-min, i.e. a_trac-a_roll > Δa-min.

7. Method according to Claim 5 or 6, **characterized in that** a minimum condition is that the traction force F_trac during a traction shifting operation is to be greater than a previously defined lower limiting value F_Zmin of the traction force, i.e. F_trac > F_Zmin, and in the case of an overrun shifting operation it is to be lower than a previously defined upper limiting value F_Smax of the overrun force F_trac < F_Smax.

8. Method according to at least one of Claims 5 to 7, **characterized in that** the minimum number n of mass values m_i is of the order of magnitude of 10 to 20 values.

9. Method according to at least one of Claims 5 to 8, **characterized in that**, before the minimum number n of mass values m_i is reached, a default value of the mass m_Def or an estimated value of the mass m_est is used for control purposes.

10. Method according to at least one of Claims 5 to 9, **characterized in that**, after the minimum number n of mass values m_i is reached and the first mass mean value m_m1 has been calculated, additional mass values m_i which meet previously defined conditions for good mass values m_good_i are determined, and **in that** the first mass mean value m_m1 is corrected by means of the additional good mass values m_good_i.

11. Method according to Claim 10, **characterized in that** the correction of the first mass mean value m_m1 is carried out in such a way that, even during the summing of the mass values m_i in order to form the first mass mean value m_m1, those mass values m_i which do not meet the conditions for good mass values are summed to form a poor sum Σm_poor_i (i = 1, n_poor), **in that** the additional good mass values m_good_i are determined and summed to form a good sum value Σm_good_i, (i = 1, n_good) until the number n_good thereof is equal to the number n_poor of the previously summed poor mass values m_poor_i, and **in that** subsequently a more precise second mass mean value m_2 is calculated by replacing the poor sum Σm_poor_i by the good sum Σm_good_i in the total sum Σm_i of the first mass mean value m_m1 and is subsequently used for control purposes.

12. Method according to Claim 10 or 11, **characterized in that** a condition for good mass values at the start of the shifting operation m_bef_good is that the gradient difference between the triggering of the shifting operation a_bef and the rolling phase a_roll is to be less than a previously defined limiting value Δa-max1, i.e. |a_bef-a_roll| < Δa_max1.

13. Method according to at least one of Claims 10 to 12, **characterized in that** a condition for good mass values at the start of the shifting operation m_bef_good is that the traction force before the shifting operation F_trac_bef during a traction shifting operation is to be greater than a previously defined limiting value F_trac_Zmin1, i.e. F_trac_bef > F_trac_Zmin1, and during an overrun shifting operation it is to be less than a previously defined limiting value F_trac_Smax1, i.e. F_trac_bef < F_trac_Smax1.

14. Method according to at least one of Claims 10 to 13, **characterized in that** a condition for good mass values for ending the shifting operation m_aft_good is that the gradient difference between the triggering of the shifting operation a_bef and the calculation of the second mass value a_aft is to be less than a previously defined limiting value Δa_max2, i.e. |a_bef-a_aft| < Δa_max2.

15. Method according to at least one of Claims 10 to 14, **characterized in that** a condition for good mass values for ending the shifting operation m_aft_good is that the traction force at the time of calculation of the second mass value m_aft during a traction shifting operation is to be greater than a previously defined limiting value F_trac_Zmin2, i.e. F_trac_aft > F_trac_Zmin2, and in the case of an overrun shifting operation it is to be less than a previously defined limiting value F_trac_Smax2, i.e. F_trac_bef < F_trac_Smax2.

16. Method according to at least one of Claims 10 to 15, **characterized in that** a condition for good mass values for ending the shifting operation m_aft_good is that the torque difference of the drive motor before and after the shifting operation M_trac_bef, M_trac_aft is to be less than a previously defined limiting value ΔM_max, i.e. |M-trac_bef-M_trac-aft|< ΔM-max.

17. Method according to at least one of Claims 10 to 16, **characterized in that** a condition for good mass values m_bef_good, m_aft_good is that the operating temperature of the drive motor t_M is to be higher than a previously defined limiting value t_M_min, i.e. t_M > t_M_min.

18. Method according to at least one of Claims 10 to 17, **characterized in that** a condition for good mass values m_bef_good, m_aft_good is that the gear stage (low gear G_L) engaged before the shifting operation is to be higher than a lowest gear G_min and lower than a highest gear G_max, i.e. G_L > G_min, G_L < G_max.

19. Method according to at least one of Claims 5 to 18, **characterized in that** a change in the vehicle mass m with respect to the current mass mean value m_m1 or m_m2 is determined, and **in that** when a previously defined change limiting value m max is exceeded the determination of a new mass mean value (m_m1, m_m2) is started.

20. Method according to Claim 19, **characterized in that** a sliding mean value m_mgl is calculated continuously from mass values m_i which meet the conditions for good mass values m_bef_good, m_aft_good, and **in that** the determination of new mass mean values m_m1, m_m2 is started if the difference between the sliding mean value m_mgl and the mass mean value m_m1 or m_m2 determined last exceeds a previously defined limiting value Δm_m_max, i.e. |m_mgl_m_m1| > Δm_m_max or |m_mgl_m_m2| > Δm_m_max.

**Revendications**

1. Procédé de détermination de la masse d'un véhicule automobile qui est exécuté en combinaison avec un changement de rapport d'une boîte de vitesses automatique d'un rapport en charge vers un rapport destinataire, des grandeurs de force et de déplacement étant détectées en partie avant ou après le changement de rapport et en partie pendant le changement de rapport afin de déterminer une valeur de masse, **caractérisé en ce que** la force de traction du moteur d'entraînement, rapportée aux roues motrices, est détectée avant et après le changement de rapport F_trac_av resp. F_trac_ap et l'accélération longitudinale du véhicule automobile est détectée avant et après le changement de rapport a_trac_av resp. a_trac_ap et aussi l'accélération pendant la phase de roulage a_roul est détectée dans la phase de roulage exempte de force de traction pendant le changement de rapport, et qu'une première valeur de masse m_av = F_trac_av/(a_trac_av - a_roul) est calculée à partir de cela pour le début du changement de rapport ainsi qu'une deuxième valeur de masse m_ap = F_trac_ap/(a_trac_ap - a_roul) pour la fin du changement de rapport d'après la formule m = F_trac/(a_trac - a_roul).

**2.** Procédé selon la revendication 1, **caractérisé en ce que** l'accélération a_roul est détectée dans la phase de roulage du changement de rapport en collectant plusieurs valeurs discrètes a_i de l'accélération a courante du véhicule automobile pendant un intervalle de temps $\Delta t$, lequel inclut la phase exempte de force de traction du changement de rapport, et en déterminant à partir de ces valeurs de l'accélération a_i l'accélération minimale a_min lors d'un changement de rapport en traction et l'accélération maximale a_max lors d'un changement de rapport en patinage, puis en utilisant cette valeur extrême de l'accélération a_min ou a_max en tant qu'accélération a_roul.

**3.** Procédé selon la revendication 2, **caractérisé en ce que** pour collecter une valeur extrême optimale de l'accélération a_min ou a_max, les valeurs d'accélération a_i sont à chaque fois détectées dans un intervalle maximum de 10 ms.

**4.** Procédé selon la revendication 2 ou 3,
**caractérisé en ce que** pour éliminer les erreurs de mesure et les perturbations, les valeurs d'accélération a_i sont filtrées avant la détermination de la valeur extrême de l'accélération a_min ou a_max.

**5.** Procédé selon au moins l'une des revendications 1 à 4, **caractérisé en ce qu'**après le début de la détection des valeurs de masse, les valeurs de masse qui satisfont à des conditions minimales déterminées préalablement sont additionnées pour former une première valeur moyenne de la masse m_m1 prévue à des fins de commande jusqu'à ce qu'un nombre minimum n préalablement fixé de valeurs de masse m_i soit atteint, et que la première valeur moyenne de la masse m_m1 est ensuite calculée par calcul de la moyenne arithmétique avec m_m1 = 1/n * $\Sigma$m_ i, (i = 1, n) et cette valeur moyenne de la masse m_m1 est tout d'abord utilisée à des fins de commande.

**6.** Procédé selon la revendication 5, **caractérisé en ce qu'**une condition minimale consiste **en ce que** la différence d'accélération a_trac - a_roul doit être supérieure à une valeur limite inférieure fixée préalablement de la différence d'accélération $\Delta$a_min, c'est-à-dire a_trac - a_roul > $\Delta$a_min.

**7.** Procédé selon la revendication 5 ou 6,
**caractérisé en ce qu'**une condition minimale consiste **en ce que** la force de traction F_trac, lors d'un changement de rapport en traction, doit être supérieure à une valeur limite inférieure F_Tmin fixée préalablement de la force de traction, c'est-à-dire F_trac > F_Tmin, et, lors d'un changement de rapport en patinage, doit être inférieure à une valeur limite supérieure F_Pmax fixée préalablement de la force de patinage, c'est-à-dire F_trac < F_Pmax.

**8.** Procédé selon au moins l'une des revendications 5 à 7, **caractérisé en ce que** le nombre minimum n de valeurs de masse m_i est de l'ordre de 10 à 20 valeurs.

**9.** Procédé selon au moins l'une des revendications 5 à 8, **caractérisé en ce qu'**avant d'atteindre le nombre minimum n de valeurs de masse m_i, une valeur par défaut de la masse m_déf ou une valeur estimée de la masse m_est est utilisée à des fins de commande.

**10.** Procédé selon au moins l'une des revendications 5 à 9, **caractérisé en ce qu'**après avoir atteint le nombre minimum n de valeurs de masse m_i et avoir calculé la première valeur moyenne de la masse m_m1, des valeurs supplémentaires de la masse m_i sont détectées, lesquelles satisfont aux conditions préalablement fixées pour les valeurs de masse conformes m_conf_i, et que la première valeur moyenne de la masse m_m1 est corrigée au moyen des valeurs de masse conformes m_conf_i supplémentaires.

**11.** Procédé selon la revendication 10, **caractérisé en ce que** la correction de la première valeur moyenne de la masse m_m1 est effectuée de telle sorte que déjà pendant l'addition des valeurs de masse m_i en vue de former la première valeur moyenne de la masse m_m1, les valeurs de masse m_i qui ne satisfont pas aux conditions des valeurs de masse conformes sont additionnées pour obtenir un total des non conformes $\Sigma$m_nonconf_i (i = 1, n_nonconf), que les valeurs de masse conformes m_conf_i supplémentaires sont détectées et additionnées pour obtenir un total des conformes $\Sigma$m_conf_i (i = 1, n_conf) jusqu'à ce que leur nombre n_conf est égal au nombre n_nonconf des valeurs de masse non conformes m_nonconf_i additionnées précédemment, et qu'une deuxième valeur moyenne de la masse m_m2 plus précise, laquelle sera ensuite utilisée à des fins de commande, est ensuite calculée en remplaçant le total des non conformes $\Sigma$m_nonconf_i par le total des conformes $\Sigma$m_conf_i dans le total général $\Sigma$m_i de la première valeur moyenne de la masse m_m1.

**12.** Procédé selon la revendication 10 ou 11,
**caractérisé en ce qu'**une condition pour des valeurs de masse conformes au début du changement de rapport m_av_conf consiste **en ce que** la différence de pente entre le déclenchement du changement de rapport $\alpha$_av et

la phase de roulage $\alpha$\_roul doit être inférieure à une valeur limite $\Delta\alpha$\_max1 fixée préalablement, c'est-à-dire |$\alpha$\_av - $\alpha$\_roul| < $\Delta\alpha$\_max1.

13. Procédé selon au moins l'une des revendications 10 à 12, **caractérisé en ce qu'**une condition pour des valeurs de masse conformes au début du changement de rapport m_av_conf consiste **en ce que** la force de traction avant le changement de rapport F_trac_av doit être supérieure à une valeur limite F_trac_Tmin1 préalablement fixée, c'est-à-dire F_trac_av > F_trac_Tmin1, dans le cas d'un changement de rapport en traction et inférieure à une valeur limite F_trac_Pmax1 préalablement fixée, c'est-à-dire F_trac_av < F_trac_Pmax1, dans le cas d'un changement de rapport en patinage.

14. Procédé selon au moins l'une des revendications 10 à 13, **caractérisé en ce qu'**une condition pour des valeurs de masse conformes à la fin du changement de rapport m_ap_conf consiste **en ce que** la différence de pente entre le déclenchement du changement de rapport $\alpha$\_av et le calcul de la deuxième valeur de masse $\alpha$\_ap doit être inférieure à une valeur limite $\Delta\alpha$\_max2 fixée préalablement, c'est-à-dire |$\alpha$\_av - $\alpha$\_ap| < $\Delta\alpha$\_max2.

15. Procédé selon au moins l'une des revendications 10 à 14, **caractérisé en ce qu'**une condition pour des valeurs de masse conformes à la fin du changement de rapport m_ap_conf consiste **en ce que** la force de traction au moment du calcul de la deuxième valeur de masse m_ap doit être supérieure à une valeur limite F_trac_Tmin2 préalablement fixée, c'est-à-dire F_trac_ap > F_trac_Tmin2, dans le cas d'un changement de rapport en traction et inférieure à une valeur limite F_trac_Pmax2 préalablement fixée, c'est-à-dire F_trac_av < F_trac_Pmax2, dans le cas d'un changement de rapport en patinage.

16. Procédé selon au moins l'une des revendications 10 à 15, **caractérisé en ce qu'**une condition pour des valeurs de masse conformes à la fin du changement de rapport m_ap_conf consiste **en ce que** la différence de couple du moteur d'entraînement avant et après le changement de rapport M_trac_av, M_trac_ap doit être inférieure à une valeur limite $\Delta$M\_max fixée préalablement, c'est-à-dire |M_trac_av - M_trac_ap| < $\Delta$M\_max.

17. Procédé selon au moins l'une des revendications 10 à 16, **caractérisé en ce qu'**une condition pour des valeurs de masse conformes m_av_conf, m_ap_conf consiste **en ce que** la température de service du moteur d'entraînement t_M doit être supérieure à une valeur limite t_M_min fixée préalablement, c'est-à-dire t_M > t_M_min.

18. Procédé selon au moins l'une des revendications 10 à 17, **caractérisé en ce qu'**une condition pour des valeurs de masse conformes m_av_conf, m_ap_conf consiste **en ce que** le rapport (rapport en charge G_L) engagé avant le changement de rapport doit être supérieur à un rapport le plus petit G_min et inférieur à un rapport le plus grand G_max, c'est-à-dire G_L > G_min, G_L < G_max.

19. Procédé selon au moins l'une des revendications 5 à 18, **caractérisé en ce qu'**une modification de la masse du véhicule m par rapport à la valeur moyenne de la masse m_m1 ou m_m2 actuelle est détectée et qu'en cas de dépassement d'une valeur limite de modification m_max fixée préalablement, la détermination d'une nouvelle valeur moyenne de la masse (m_m1, m_m2) est démarrée.

20. Procédé selon la revendication 19, **caractérisé en ce qu'**une valeur moyenne glissante m_mgl est calculée en permanence pour les valeurs de masse m_i qui satisfont aux conditions de valeurs de masse conformes m_av_conf, m_ap_conf, et que la détection de nouvelles valeurs moyennes de la masse m_m1, m_m2 démarre lorsque la différence entre la valeur moyenne glissante m_mgl et la valeur moyenne de la masse m_m1 ou m_m2 détectée en dernier dépasse une valeur limite $\Delta$m\_m\_max fixée préalablement, c'est-à-dire |m_mgl - m_m1| > $\Delta$m\_m\_max ou |m_mgl - m_m2| > $\Delta$m\_m\_max.

EP 2 021 745 B1

S1 | Masse-Initialisierungswert

S2 | Masseschätzung beim Anfahren

S3 | Berechnung Masseeinzelwerte über eine Schaltung

S4 | Masse-Mittelwert berechnen

S5 | als schlecht klassifizierte Massewerte addieren

S6 — Anzahl erreicht ? — nein

S7 | Massemittelwert als Initialisierungswert speichern

S8 | als gut klassifizierte Massewerte addieren

S9 — Anzahl erreicht ? — nein

S10 | Massemittelwert korrigieren durch Summentausch

S11 — neu ermitteln ? — ja

S12 — Stillstand ? — ja / nein

Fig. 1

14

1. Schaltung   2. Schaltung        3. Schaltung   4. Schaltung

a_fzg_filt [m/s$^2$]

a_roll_peak [m/s$^2$]

Fig. 2

EP 2 021 745 B1

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0695930 A1
- WO 0011439 A
- EP 0666435 A
- US 6249735 B